(19) **Europäisches Patentamt European Patent Office Office européen des brevets**

(11) **EP 4 139 844 B1**

(12) **EUROPEAN PATENT SPECIFICATION**

(45) Date of publication and mention of the grant of the patent:
**12.02.2025 Bulletin 2025/07**

(21) Application number: **20720804.2**

(22) Date of filing: **20.04.2020**

(51) International Patent Classification (IPC):
**G06N 3/006** (2023.01)    **G06N 3/045** (2023.01)
**G06N 7/01** (2023.01)    **G06N 3/08** (2023.01)

(52) Cooperative Patent Classification (CPC):
**G06N 3/006; G06N 3/045; G06N 3/08; G06N 7/01**

(86) International application number:
**PCT/EP2020/061006**

(87) International publication number:
**WO 2021/213616 (28.10.2021 Gazette 2021/43)**

(54) **TACTICAL DECISION-MAKING THROUGH REINFORCEMENT LEARNING WITH UNCERTAINTY ESTIMATION**

TAKTISCHE ENTSCHEIDUNGSFINDUNG DURCH VERSTÄRKUNGSLERNEN MIT UNSICHERHEITSSCHÄTZUNG

PRISE DE DÉCISION TACTIQUE PAR L'INTERMÉDIAIRE D'UN APPRENTISSAGE PAR RENFORCEMENT AVEC ESTIMATION D'INCERTITUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **Volvo Autonomous Solutions AB 405 08 Göteborg (SE)**

(72) Inventors:
• **HOEL, Carl-Johan**
  **413 23 GÖTEBORG (SE)**
• **LAINE, Leo**
  **438 94 HÄRRYDA (SE)**

(74) Representative: **Kransell & Wennborg KB P.O. Box 2096 403 12 Göteborg (SE)**

(56) References cited:
• **BJORN LUTJENS ET AL: "Safe Reinforcement Learning with Model Uncertainty Estimates", ARXIV.ORG, CORNELL UNIVERSITY LIBRARY, 201 OLIN LIBRARY CORNELL UNIVERSITY ITHACA, NY 14853, 20 October 2018 (2018-10-20), XP081068153**

• **GREGORY KAHN ET AL: "Uncertainty-Aware Reinforcement Learning for Collision Avoidance", ARXIV.ORG, CORNELL UNIVERSITY LIBRARY, 201 OLIN LIBRARY CORNELL UNIVERSITY ITHACA, NY 14853, 3 February 2017 (2017-02-03), XP080746608**
• **IAN OSBAND ET AL: "Deep Exploration via Bootstrapped DQN", 4 July 2016 (2016-07-04), XP055446534, Retrieved from the Internet <URL:https://arxiv.org/pdf/1602.04621.pdf> [retrieved on 20180131]**
• **IAN OSBAND ET AL: "Randomized Prior Functions for Deep Reinforcement Learning", ARXIV.ORG, CORNELL UNIVERSITY LIBRARY, 201 OLIN LIBRARY CORNELL UNIVERSITY ITHACA, NY 14853, 8 June 2018 (2018-06-08), XP081425988**
• **ANDREAS SEDLMEIER ET AL: "Uncertainty-Based Out-of-Distribution Detection in Deep Reinforcement Learning", ARXIV.ORG, CORNELL UNIVERSITY LIBRARY, 201 OLIN LIBRARY CORNELL UNIVERSITY ITHACA, NY 14853, 8 January 2019 (2019-01-08), XP081012427**

- CARL-JOHAN HOEL ET AL: "Tactical Decision-Making in Autonomous Driving by Reinforcement Learning with Uncertainty Estimation", ARXIV.ORG, CORNELL UNIVERSITY LIBRARY, 201 OLIN LIBRARY CORNELL UNIVERSITY ITHACA, NY 14853, 22 April 2020 (2020-04-22), XP081650293
- CARL-JOHAN HOEL ET AL: "Reinforcement Learning with Uncertainty Estimation for Tactical Decision-Making in Intersections", ARXIV.ORG, CORNELL UNIVERSITY LIBRARY, 201 OLIN LIBRARY CORNELL UNIVERSITY ITHACA, NY 14853, 17 June 2020 (2020-06-17), XP081697827
- BJORN LUTJENS ET AL: "Safe Reinforcement Learning with Model Uncertainty Estimates", ARXIV.ORG, CORNELL UNIVERSITY LIBRARY, 201 OLIN LIBRARY CORNELL UNIVERSITY ITHACA, NY 14853, 20 October 2018 (2018-10-20), XP081068153
- GREGORY KAHN ET AL: "Uncertainty-Aware Reinforcement Learning for Collision Avoidance", ARXIV.ORG, CORNELL UNIVERSITY LIBRARY, 201 OLIN LIBRARY CORNELL UNIVERSITY ITHACA, NY 14853, 3 February 2017 (2017-02-03), XP080746608
- IAN OSBAND ET AL: "Deep Exploration via Bootstrapped DQN", 4 July 2016 (2016-07-04), XP055446534, Retrieved from the Internet <URL:https://arxiv.org/pdf/1602.04621.pdf> [retrieved on 20180131]
- IAN OSBAND ET AL: "Randomized Prior Functions for Deep Reinforcement Learning", ARXIV.ORG, CORNELL UNIVERSITY LIBRARY, 201 OLIN LIBRARY CORNELL UNIVERSITY ITHACA, NY 14853, 8 June 2018 (2018-06-08), XP081425988
- ANDREAS SEDLMEIER ET AL: "Uncertainty-Based Out-of-Distribution Detection in Deep Reinforcement Learning", ARXIV.ORG, CORNELL UNIVERSITY LIBRARY, 201 OLIN LIBRARY CORNELL UNIVERSITY ITHACA, NY 14853, 8 January 2019 (2019-01-08), XP081012427
- CARL-JOHAN HOEL ET AL: "Tactical Decision-Making in Autonomous Driving by Reinforcement Learning with Uncertainty Estimation", ARXIV.ORG, CORNELL UNIVERSITY LIBRARY, 201 OLIN LIBRARY CORNELL UNIVERSITY ITHACA, NY 14853, 22 April 2020 (2020-04-22), XP081650293
- CARL-JOHAN HOEL ET AL: "Reinforcement Learning with Uncertainty Estimation for Tactical Decision-Making in Intersections", ARXIV.ORG, CORNELL UNIVERSITY LIBRARY, 201 OLIN LIBRARY CORNELL UNIVERSITY ITHACA, NY 14853, 17 June 2020 (2020-06-17), XP081697827

## Description

### TECHNICAL FIELD

The present disclosure relates to the field of autonomous vehicles and in particular to a method of controlling an autonomous vehicle using a reinforcement learning agent.

## BACKGROUND

The decision-making task of an autonomous vehicle is commonly divided into strategic, tactical, and operational decision-making, also called navigation, guidance and stabilization. In short, tactical decisions refer to high-level, often discrete, decisions, such as when to change lanes on a highway, or whether to stop or go at an intersection. This invention primarily targets the tactical decision-making field.

Tactical decision-making is challenging due to the diverse set of environments the vehicle needs to handle, the interaction with other road users, and the uncertainty associated with sensor information. To manually predict all situations that can occur and code a suitable behavior is infeasible. Therefore, it is an attractive option to consider methods that are based on machine learning to train a decision-making agent.

Conventional decision-making methods are based on predefined rules and implemented as hand-crafted state machines. Other classical methods treat the decision-making task as a motion planning problem. Although these methods are successful in many cases, one drawback is that they are designed for specific driving situations, which makes it hard to scale them to the complexity of real-world driving.

Reinforcement learning (RL) has previously been applied to decision-making for autonomous driving in simulated environments. See for example C. J. Hoel, K. Wolff and L. Laine, "Automated speed and lane change decision making using deep reinforcement learning", Proceedings of the 21st International Conference on Intelligent Transportation Systems (ITSC), 4-7 Nov. 2018, pp. 2148-2155 [doi:10.1109/ITSC.2018.8569568]. However, the agents that were trained by RL in previous works can only be expected to output rational decisions in situations that are close to the training distribution. Indeed, a fundamental problem with these methods is that no matter what situation the agents are facing, they will always output a decision, with no suggestion or indication about the uncertainty of the decision or whether the agent has experienced anything similar during its training. If, for example, an agent that was trained for one-way highway driving was deployed in a scenario with oncoming traffic, it would still output decisions, without any warning that these are presumably of a much lower quality. A more subtle case of insufficient training is one where the agent that has been exposed to a nominal or normal highway driving environment is suddenly facing a speeding driver or an accident that creates standstill traffic.

A precaution that has been taken in view of such shortcomings is comprehensive real-world testing in confined environments, combined with successive refinements. Testing and refinement are iterated until the decision-making agent is seen to make an acceptably low level of observed errors and thus fit for use outside the testing environment. This is onerous, time-consuming and drains resources from other aspects of research and development.

"Safe Reinforcement Learning with Model Uncertainty Estimates", 2018-10-20 (Lütjens et al.) applies Monte-Carlo dropout and bootstrapping to give computationally tractable and parallelizable uncertainty estimates relating to decision-making for control of autonomous vehicles on the basis of deep neural networks (DNNs). The methods are embedded in a Safe Reinforcement Learning framework to form uncertainty-aware navigation around pedestrians. The result is claimed to be collision-avoidance policy that is insightful about what it does not know and cautiously avoids pedestrians that exhibit unseen behavior. On a technical level, the authors establish a set of LSTM networks to predict the collision probabilities of motion primitives; the decision-making is based on a model predictive controller (MPC) which selects the safest motion primitive with the smallest joint cost.

"Uncertainty-Aware Reinforcement Learning for Collision Avoidance", 2017-02-03 (Kahn et al.) discloses a further MPC approach, which uses an uncertainty-aware collision prediction model $P\_\theta$ dependent on the environment M.

"Deep Exploration via Bootstrapped DQN", 2016-07-04 (Osband et al.) introduces the concept of a bootstrapped deep Q-learning network (DQN), which consists of a shared architecture with multiple bootstrapped "heads" branching off independently. Each head is trained only on its bootstrapped sub-samples of the data and represents a single bootstrap sample. On the one hand, the bootstrapped DQN is used to explore an unknown arcade game environment. The authors report that more efficient exploration is achieved when, at the start of each episode, the bootstrapped DQN samples a single Q-value function from its approximate posterior, i.e., when a single head is caused to take the decisions for each episode. On the other hand, ensemble-level decision-making is disclose, wherein multiple heads vote for their preferred action in a given state and the votes are summed. The authors contend that the distribution of the votes across heads is a measure of the uncertainty of such a majority vote.

**EP 4 139 844 B1**

## SUMMARY

The invention is set out in independent claims 1 and 10-12. Preferred aspects of the invention are set out in the dependent claims. One objective of the present invention is to make available methods and devices for assessing the uncertainty of outputs of a decision-making agent, such as an RL agent. A particular objective would be to provide methods and devices by which the decision-making agent does not just output a recommended decision, but also estimates an uncertainty of this decision. Such methods and devices may preferably include a safety criterion that determines whether the trained decision-making agent is confident enough about a particular decision, so that - in the negative case - the agent can be overridden by a safety-oriented fallback decision.

These and other objectives are achieved by the invention according to the independent claims. The dependent claims define example embodiments of the invention.

In a first aspect of the invention, there is provided a method of controlling an autonomous vehicle using an RL agent with the technical features of claim 1. The training sessions in the method can be performed sequentially with respect to time, or in parallel with each other. A tentative tactical driving decision to perform action $\hat{a}$ in state $\hat{s}$ can be represented as state-action pair $(\hat{s}, \hat{a})$.

Generalizing this to the case where the RL agent outputs an arbitrary number $L \geq 1$ of tentative decisions corresponding to possible actions $\hat{a}_1, \hat{a}_2, ..., \hat{a}_L$ to be taken in a state $\hat{s}$ the $K$ different state-action value functions will be evaluated for each pair $(\hat{s}, \hat{a}_l)$ with $1 \leq l \leq L$.

Accordingly, the uncertainty of a tentative decision to take action $\hat{a}$ in state $\hat{s}$ is assessed on the basis of a measure of the statistic variability of $K$ observations being the $K$ state-action value functions evaluated for this state-action pair: $Q_1$ $(\hat{s}, \hat{a})$, $Q_2$ $(\hat{s}, \hat{a})$, ..., $Q_K(\hat{s}, \hat{a})$. The uncertainty is assessed on the basis of the variability measure, that is, either by considering its value without processing or by considering a quantity derived from the variability measure, e.g., after normalization, scaling, combination with other relevant factors etc. Where there are multiple tentative decisions ($L \geq 2$), multiple values of the variability measure are computed. Then, the tentative decision or decisions are executed in dependence of the estimated uncertainty. When execution of the tentative decision is made dependent on the uncertainty - wherein possible outcomes may be non-execution or execution with additional safety-oriented restrictions - a desired safety level can be sustained.

As used herein, an "RL agent" may be understood as software instructions implementing a mapping from a state s to an action $a$. The term "environment" refers to a simulated or real-world environment, in which the autonomous vehicle - or its model/avatar in the case of a simulated environment - operates. A mathematical model of the RL agent's interaction with an "environment" in this sense is given below. A "variability measure" includes any suitable measure for quantifying statistic dispersion, such as a variance, a range of variation, a deviation, a variation coefficient, an entropy etc. Generally, all terms used in the claims are to be construed according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

According to the invention, a tentative decision is executed only if the estimated uncertainty is less than a predefined threshold. This may impose a condition requiring the uncertainty to be below a tolerable threshold in order for the tentative decision to be executed. This serves to inhibit execution of uncertain decisions, which tend to be unsafe decisions, and is therefore in the interest of road safety.

Some embodiments may treat the estimated uncertainty as a continuous variable, which may guide the quantity of additional safety measures necessary to achieve a desired safety standard, e.g., a maximum speed or traffic density at which the tentative decision shall be considered safe to execute.

In one embodiment, where multiple tentative decisions by the RL agent are available ($L \geq 2$), the tentative decisions are ordered sequentially and evaluated with respect to their estimated uncertainties. The method may apply the rule that the first tentative decision in the sequence which is found to have an estimated uncertainty below the predefined threshold shall be executed. While this may imply that a tentative decision which is located late in the sequence is not executed even though its estimated uncertainty is below the predefined threshold, this remains one of several possible ways in which the tentative decisions can be "executed in dependence of the estimated uncertainty" in the sense of the claims. An advantage with this embodiment is that an executable tentative decision is found without having to evaluate all available tentative decision with respect to uncertainty.

In a further development of the preceding embodiment, a fallback decision is executed if the sequential evaluation does not return a tentative decision to be executed. For example, if the last tentative decision in the sequence is found to have too large uncertainty, the fallback decision is executed. The fallback decision may be safety-oriented, which benefits road safety. At least in tactical decision-making, the fallback decision may include taking no action. To illustrate, if all tentative decisions achieving an overtaking of a slow vehicle ahead are found to be too uncertain, the fallback decision may be to not overtake the slow vehicle.

In various embodiments, the RL agent may be implemented by at least one neural network. In particular, *K* neural networks may be utilized to perform the *K* training sessions. Each of the *K* neural networks may be initialized with an independently sampled set of weights.

The invention is not dependent on the specific type of RL agent but can be embodied using a policy-based or value-based RL agent. Specifically, the RL agent may include a policy network and a value network. The RL agent may be obtained by a policy-gradient algorithm, such as an actor-critic algorithm. As another example, the RL agent is a Q-learning agent, such as a deep Q network (DQN).

In a second aspect of the invention, there is provided an arrangement for controlling an autonomous vehicle with the technical features according to claim 10.

In a third aspect, the invention provides a computer program for executing the vehicle control method on an arrangement with these characteristics. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storages of the magnetic, optical or solid-state type. Still within the scope of "data carrier", such memories may be fixedly mounted or portable.

The arrangement according to the second aspect of the invention and the computer program according to the third aspect have same or similar effects and advantages as the method according to the first aspect. The embodiments and further developments described above in method terms are equally applicable to the second and third aspects.

**BRIEF DESCRIPTION OF THE DRAWINGS**

Embodiments of the invention are described, by way of example, with reference to the accompanying drawings, on which:

figure 1 is a flowchart of a method according to an embodiment of the invention;

figure 2 is a block diagram of an arrangement for controlling an autonomous vehicle according to another embodiment of the invention;

figure 3 shows an architecture of a neural network of an RL agent; and

figure 4 is a plot of the mean uncertainty of a chosen action over 5 million training steps in an example.

**DETAILED DESCRIPTION**

The aspects of the present invention will now be described more fully with reference to the accompanying drawings, on which certain embodiments of the invention are shown. These aspects may, however, be embodied in many different forms and the described embodiments should not be construed as limiting; rather, they are provided by way of example so that this disclosure will be thorough and complete, and to fully convey the scope of all aspects of invention to those skilled in the art.

Reinforcement learning is a subfield of machine learning, where an agent interacts with some environment to learn a policy $\pi(s)$ that maximizes the future expected return. Reference is made to the textbook R. S. Sutton and A. G. Barto, Reinforcement Learning: An Introduction, 2nd ed., MIT Press (2018).

The policy $\pi(s)$ defines which action a to take in each state s. When an action is taken, the environment transitions to a new state s' and the agent receives a reward r. The reinforcement learning problem can be modeled as a Markov Decision Process (MDP), which is defined by the tuple $(\mathcal{S}; \mathcal{A}; T; R; \gamma)$, where $\mathcal{S}$ is the state space, $\mathcal{A}$ is the action space, *T* is a state transition model (or evolution operator), *R* is a reward model, and $\gamma$ is a discount factor. This model can also be considered to represent the RL agent's interaction with the training environment. At every time step t, the goal of the agent is to choose an action a that maximizes the discounted return,

$$R_t = \sum_{k=0}^{\infty} \gamma^k r_{t+k}.$$

In Q-learning, the agent tries to learn the optimal action-value function $Q^*(s, a)$, which is defined as

$$Q^*(s,a) = \max_{\pi} \mathbb{E}[R_t | s_t = s, a_t = a, \pi].$$

From the optimal action-value function, the policy is derived as per

$$\pi(s) = \text{argmax}\, Q^*(s,a).$$

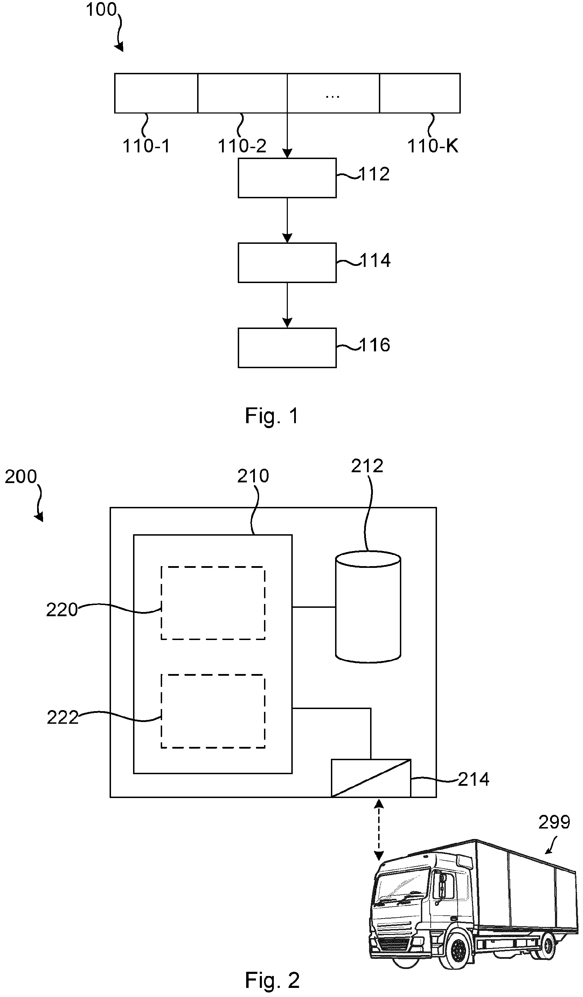

An embodiment of the invention is illustrated by figure 1, which is a flowchart of a method 100 for controlling an autonomous vehicle by means of an RL agent. In the embodiment illustrated, the method begins with a plurality of training sessions 110-1, 110-2, ..., 110-K $(K \geq 2)$, which may be carried out in a simultaneous or at least time-overlapping fashion. In each training session, the RL agent interacts with an environment which has its own initial value and includes the autonomous vehicle (or, if the environment is simulated, a model of the vehicle). The $k^{th}$ training session returns a state-action value function $Q_k(s,a)$, for any $1 \leq k \leq K$, from which a decision-making policy may be derived in the manner described above. All $K$ state-action value functions are combined into a common state-action value function $\overline{Q}(s,a)$, which may represent a central tendency of the state-action value functions, such as a mean value, of the $K$ state-action values:

$$\overline{Q}(s,a) = \frac{1}{K} \sum_{k=1}^{K} Q_k(s,a).$$

The inventors have realized that the uncertainty of a tentative decision corresponding to the state-action pair $(\hat{s}, \hat{a})$ can be estimated on the basis of a variability of the numbers $Q_1(\hat{s}, \hat{a})$, $Q_2(\hat{s}, \hat{a})$, ..., $Q_K(\hat{s}, \hat{a})$. The variability may be measured as the standard deviation, coefficient of variation (i.e., standard deviation normalized by mean), variance, range, mean absolute difference or the like. The variability measure is denoted $c_v(\hat{s}, \hat{a})$ in this disclosure, whichever definition is used.

In the illustrated method 100, therefore, a decision-making step 112, in which the RL agent outputs at least one tentative decision $(\hat{s}, \hat{a}_l)$, $1 \leq l \leq L$ with $L \geq 1$, relating to control of the autonomous vehicle, is followed by a third step 114 of estimating the uncertainty of this tentative decision or decisions on the basis of the variability measure $c_v(\hat{s}, \hat{a}_l)$.

In a fourth step 116, the $L \geq 1$ tentative decisions are put to use in dependence of their respective estimated uncertainties, i.e., on the basis of $c_v(\hat{s}, \hat{a}_l)$ $(1 \leq l \leq L)$ for the purpose of controlling the autonomous vehicle. A relatively high value of the variability measure $c_v(\hat{s}, \hat{a}_l)$ indicates that the RL agent is far from the training distribution and, thus, that the tentative decision $(\hat{s}, \hat{a}_l)$ may be regarded as relatively unsafe. For example, one may choose to execute the $l^{th}$ decision only if the variability is less than a threshold $C_v$, that is, only if $c_v(\hat{s}, \hat{a}_l) < C_v$.

To find a single executable action $\hat{a}$ for state $\hat{s}$, one may maximize the mean $Q$ value subject to the above threshold condition:

$$\underset{a}{\text{argmax}}\, \overline{Q}(\hat{s},a),$$

subject to

$$c_v(\hat{s},a) < C_v.$$

The threshold $C_v$ may represent a desired safety level at which the autonomous vehicle is operated. It may have been determined or calibrated by traffic testing and may be based on the frequency of decisions deemed erroneous, collisions, near-collisions, road departures and the like.

It is noted that the variability measure need not be actually computed between the second 112 and fourth 116 steps of the method 100. A feasible alternative would be to pre-compute the variability for all possible state-action pairs, or for a subset of all possible state-action, and store this. Example subsets include the state-action pairs that a programmer expects may be relevant during driving or the state-action pairs recorded during simulated or real-world test drives. When variability measures have been pre-computed for merely a subset of the possible state-action values, the set of pre-computed values may need to be supplemented by processing capacity allowing to add a missing variability measure value during operation. The set of pre-computed values need not be updated as long as the agent is unchanged; this may be the case for as long as the agent does not undergo additional training and/or is reconfigured.

Figure 2 illustrates an arrangement 200 for controlling an autonomous vehicle 299 according to another embodiment of the invention. The autonomous vehicle 299 may be any road vehicle or vehicle combination, including trucks, buses, construction equipment, mining equipment and other heavy equipment operating in public or non-public traffic. The arrangement 200 maybe provided, at last partially, in the autonomous vehicle 299. The arrangement 200, or portions thereof, may alternatively be provided as part of a stationary or mobile controller (not shown), which communicates with the vehicle 299 wirelessly.

The arrangement 200 includes processing circuitry 210, a memory 212 and a vehicle control interface 214. The vehicle control interface 214 is configured to control the autonomous vehicle 299 by transmitting wired or wireless signals, directly or via intermediary components, to actuators (not shown) in the vehicle. In a similar fashion, the vehicle control interface 214 may receive signals from physical sensors (not shown) in the vehicle so as to detect current conditions of the driving environment or internal states prevailing in the vehicle 299. The processing circuitry 210 implements an RL agent 220 and an uncertainty estimator 222 to be described next.

The RL agent 220 interacts with an environment including the autonomous vehicle in a plurality of training sessions, each training session having a different initial value and yielding a state-action value function dependent on state and action. The RL agent 220 then outputs at least one tentative decision relating to control of the autonomous vehicle. The RL agent 220 may, at least during the training phase, comprise as many sub-agents as there are training sessions, each sub-agent corresponding to a state-action value function $Q_k(s, a)$. The sub-agents maybe combined into a joint RL agent, corresponding to a common state-action value function $\overline{Q}(s, a)$, for the purpose of the decision-making.

The uncertainty estimator 222 is configured to estimate an uncertainty on the basis of a variability measure for the plurality of state-action value functions evaluated for a state-action pair corresponding to each of the tentative decisions by the RL agent. The outcome is utilized by the vehicle control interface 214 which, in this embodiment, is configured to control the autonomous vehicle 299 by executing the at least one tentative decision in dependence of the estimated uncertainty.

Returning to the description of the invention from a mathematical viewpoint, an embodiment relies on the DQN algorithm. This algorithm uses a neural network with weights $\theta$ to approximate the optimal action-value function as $Q^*(s, a) \approx Q(s, a; \theta)$; see further V. Mnih et al., "Human-level control through deep reinforcement learning", Nature, vol. 518, pp. 529-533 (2015) [doi:10.1038/nature14236.]. Since the action-value function follows the Bellman equation, the weights can be optimized by minimizing the loss function

$$L(\theta) = \mathbb{E}\left[\left(r + \gamma \max_a Q(s', a' : \theta^-) - Q(s, a; \theta)\right)^2\right]$$

As explained in Mnih, the loss is calculated for a minibatch M and the weights $\theta^-$ of a target network are updated repeatedly.

The DQN algorithm returns a maximum likelihood estimate of the $Q$ values but gives no information about the uncertainty of the estimation. The risk of an action could be represented as the variance of the return when taking that action. One line of RL research focuses on obtaining an estimate of the uncertainty by statistical bootstrap; an ensemble of models is then trained on different subsets of the available data and the distribution that is given by the ensemble is used to approximate the uncertainty. A sometimes better-performing Bayesian posterior is obtained if a randomized prior function (RPF) is added to each ensemble member; see for example I. Osband, J. Aslanides and A. Cassirer, "Randomized prior functions for deep reinforcement learning," in: S. Bengjo et al. (eds.), Adv. in Neural Inf. Process. Syst. 31 (2018), pp. 8617-8629. When RPF is used, each individual ensemble member, here indexed by $k$, estimates the Q values as the sum

$$Q_k(s, a) = f(s, a; \theta_k) + \beta p(s, a; \hat{\theta}_k),$$

where $f, p$ are neural networks, with parameters $\theta_k$ that can be trained and further parameters $\hat{\theta}_k$ that are kept fixed. The factor $\beta$ can be used to tune the importance of the prior function. When adding the prior, the loss function $L(\theta)$ defined above changes into

$$L(\theta_k) = \mathbb{E}_M\left[\left(r + \gamma \max_{a'}(f_{\theta_k^-} + \beta p_{\hat{\theta}_k})(s', a') - (f_{\theta_k^-} + \beta p_{\hat{\theta}_k})(s, a)\right)^2\right].$$

The full ensemble RPF method, which was used in this implement-tation, may be represented in pseudo-code as Algorithm 1:

---

**Algorithm 1** Ensemble RPF training process

---

1: **for** $k \leftarrow 1$ to $K$
2:     Initialize $\theta_k$ and $\hat{\theta}_k$ randomly
3:     $m_k \leftarrow \{\}$
4: $i \leftarrow 0$
5: **while** networks not converged
6:     $s_i \leftarrow$ initial random state
7:     $k \sim \mathcal{U}\{1, K\}$
8:     **while** episode not finished
9:         $a_i \leftarrow \arg\max_a Q_k(s_i, a)$
10:         $s_{i+1}, r_i \leftarrow$ STEPENVIRONMENT$(s_i, a_i)$
11:         **for** $k \leftarrow 1$ to $K$
12:             **if** $p \sim \mathcal{U}(0, 1) < p_{\text{add}}$
13:                 $m_k \leftarrow m_k \cup \{(s_i, a_i, r_i, s_{i+1})\}$
14:             $M \leftarrow$ sample from $m_k$
15:             update $\theta_k$ with SGD and loss $L(\theta_k)$
16:         $i \leftarrow i + 1$

---

In the pseudo-code, the function StepEnvironment corresponds to a combination of the reward model $R$ and state transition model $T$ discussed above. The notation $k \sim \mathcal{U}\{1, K\}$ refers to sampling of an integer $k$ from a uniform distribution over the integer range [1, K], and $p \sim \mathcal{U}(0,1)$ denotes sampling of a real number from a uniform distribution over the open interval (0,1).

Here, an ensemble of $K$ trainable neural networks and $K$ fixed prior networks are first initialized randomly. A replay memory is divided into $K$ parallel buffers $m_k$, for the individual ensemble members (although in practice, this can be implemented in a memory-efficient way that uses a negligible amount of more memory than a single replay memory). To handle exploration, a random ensemble member is chosen for each training episode. Actions are then taken by greedily maximizing the $Q$ value of the chosen ensemble member, which corresponds to a form of approximate Thompson sampling. The new experience ($s_i$, $a_i$, $r_i$, $s_{i+1}$) is then added to each ensemble buffer with probability $p_{add}$. Finally, a minibatch $M$ of experiences is sampled from each ensemble buffer and the trainable network parameters of the corresponding ensemble member are updated by stochastic gradient descent (SGD), using the second definition of the loss function given above.

The presented ensemble RPF algorithm was trained in a one-way, three-lane highway driving scenario using the Simulation of Urban Mobility (SUMO) traffic simulator. The vehicle to be controlled (ego vehicle) was a 16 m long truck-trailer combination with a maximum speed of 25 m/s. In the beginning of each episode, 25 passenger cars were inserted into the simulation, with a random desired speed in the range 15 to 35 m/s. In order to create interesting traffic situations, slower vehicles were positioned in front of the ego vehicle, and faster vehicles were placed behind the ego vehicle. Each episode was terminated after N = 100 timesteps, or earlier if a collision occurred or the ego vehicle drove off the road. The simulation time step was set to $\Delta t = 1$ s. The passenger vehicles were controlled by the standard SUMO driver model, which consists of an adaptive cruise controller for the longitudinal motion and a lane-change model that makes tactical decisions to overtake slower vehicles. In the scenarios considered here, no strategical decisions were necessary, so the strategical part of the lane-changing model was turned off. Furthermore, in order to make the traffic situations more demanding, the cooperation level of the lane changing model was set to zero. Overtaking was allowed both on the left and right side of another vehicle, and each lane change took 4 s to complete. This environment was modeled by defining a corresponding state space $\mathcal{S}$, action space $\mathcal{A}$, state transition model $T$, and reward $R$.

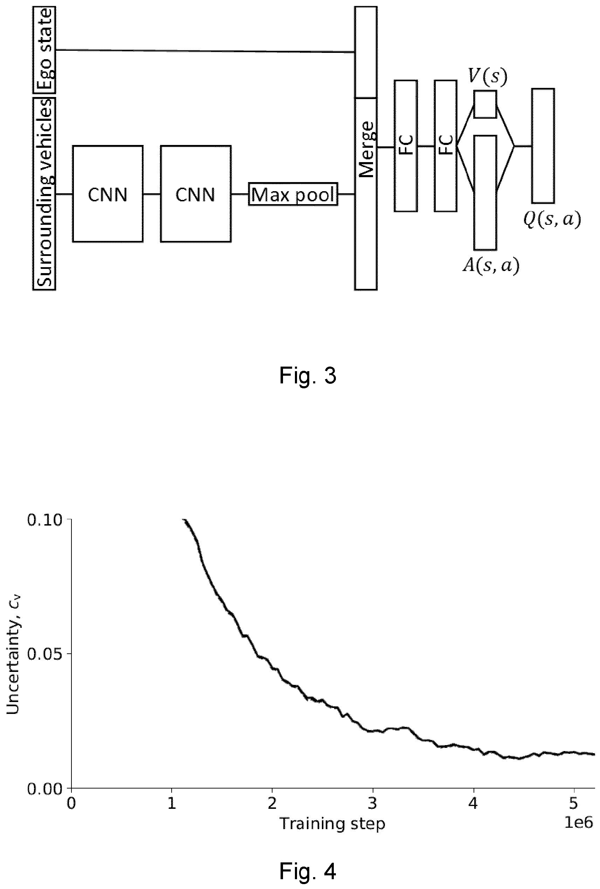

Figure 3 illustrates the architecture of the neural network is used in this embodiment. The architecture includes a temporal convolutional neural network (CNN) architecture, which makes the training faster and, at least in some use cases, gives better results than a standard fully connected (FC) architecture. By applying CNN layers and a max pooling layer to the part of the input that describes the surrounding vehicles, the output of the network becomes independent of the ordering of the surrounding vehicles in the input vector, and the architecture allows a varying input vector size. Rectified linear units (ReLUs) are used as activation functions for all layers, except the last, which has a linear activation function. The architecture also includes a dueling structure that separates the state value $V(s)$ and action advantage $A(s, a)$

estimation.

In an example, the RL agent was trained in the simulated environment described above. After every 50000 added training samples, henceforth called training steps, the agent was evaluated on 100 different test episodes. These test episodes were randomly generated in the same way as the training episodes, but not present during the training. The test episodes were also kept identical for all the test phases. The safety criterion $c_v(s, a) < C_v$ was not active in the test episodes but used when the fully trained agent was exposed to unseen scenarios.

To gain insight into how the uncertainty estimation evolves during the training process, and to illustrate how to set the uncertainty threshold parameter $C_v$, figure 4 shows the coefficient of variation $c_v$ for the chosen action during the test episodes as a function of the number of training steps (scale in millions of steps). Each plotted value is an average over the 100 test episodes of that test phase. Figure 4 shows the uncertainty of the chosen action, whereas the uncertainty for not-chosen actions may be higher. After around four million training steps, the coefficient of variation settles at around 0.01, with a small spread in values, which may justify setting the threshold $C_v = 0.02$.

To assess the ability of the RPF ensemble agent to cope with unseen situations, the agent obtained after five million training steps was deployed in scenarios that had not been included in the training episodes. In various situations that involved an oncoming vehicle, the uncertainty estimate was consistently high, $c_v \approx 0.2$. The fact that this value is one level of magnitude above the proposed value of the threshold $C_v = 0.02$, along with several further examples, suggests that the safety criterion $c_v(s, a) < C_v$ is a robust and reliable safeguard against decision-making for which the agent has not been adequately trained.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. In particular, the disclosed approach to estimating the uncertainty of a decision by an RL agent is applicable in machine learning more generally, also outside of the field of autonomous vehicles, and may be advantageous wherever the reliability of a decision is expected to influence personal safety, material values, information quality, user experience and the like.

**Claims**

1. A computer-implemented method (100) of controlling actuators in an autonomous vehicle using a reinforcement learning, RL, agent, the method comprising:

   a plurality of training sessions (110-1, ..., 110-K), in which the RL agent interacts with a simulated or real-world environment including the autonomous vehicle, such that in each training session the environment has a different initial value and each training session yields a state-action value function $Q_K(s, a)$ dependent on state and action;
   decision-making (112), in which the RL agent outputs, for a state which describes the surrounding vehicles in a driving environment of the autonomous vehicle, at least one tentative tactical driving decision, such as a lane change or whether to stop or go at an intersection, relating to control of the autonomous vehicle in the real world, wherein the tentative tactical driving decision is based on a common state-action value function $\overline{Q}(s, a)$ obtained by combining the plurality of state-action value functions $Q_K(s, a)$ from the training sessions;
   an uncertainty estimation (114), including computing a variability measure for values of the plurality of state-action value functions evaluated for a state-action pair corresponding to each of the tentative tactical driving decisions; and
   vehicle control (116), wherein the at least one tentative tactical driving decision is executed in the real world by transmitting wired or wireless signals to the actuators in the vehicle and in dependence of the estimated uncertainty, such that one of the tentative tactical driving decisions is executed only if its variability measure is less than a threshold $C_v$,
   wherein the variability measure is one or more of the following: a variance, a range, a deviation, a variation coefficient, an entropy.

2. The method of claim 1, wherein:

   the decision-making includes the RL agent outputting multiple tentative decisions; and
   the vehicle control includes sequential evaluation of the tentative decisions with respect to their estimated uncertainties.

3. The method of claim 2, wherein a fallback decision is executed if the sequential evaluation does not return a tentative decision to be executed.

**4.** The method of any of the preceding claims, wherein the RL agent includes at least one neural network.

**5.** The method of claim 4, wherein the RL agent is obtained by a policy gradient algorithm, such as an actor-critic algorithm.

**6.** The method of claim 4, wherein the RL agent is a Q-learning agent, such as a deep Q network, DQN.

**7.** The method of any of claims 4 to 6, wherein the training sessions use an equal number of neural networks.

**8.** The method of any of claims 4 to 7, wherein the initial value corresponds to a randomized prior function, RPF.

**9.** The method of any of the preceding claims, wherein the decision-making is based on a central tendency of said plurality of state-action value functions.

**10.** An arrangement (200) for controlling actuators in an autonomous vehicle (299), comprising:

a vehicle control interface (214) configured to receive signals from physical sensors in the vehicle, for thereby detecting current conditions of a driving environment of the autonomous vehicle or internal states prevailing in the vehicle, and to control the autonomous vehicle by transmitting wired or wireless signals to the actuators in the vehicle;
a memory (212); and
processing circuitry (210) connected to the vehicle control interface and implementing a reinforcement learning, RL, agent (220) configured to:

- interact with a simulated or real-world environment including the autonomous vehicle in a plurality of training sessions, such that in each training session the environment has a different initial value and the training session yields a state-action value function $Q_k(s, a)$ dependent on state and action, and
- for a state which describes the surrounding vehicles in a driving environment of the autonomous vehicle, output at least one tentative tactical driving decision, such as a lane change or whether to stop or go at an intersection, relating to control of the autonomous vehicle in the real world, wherein the tentative tactical driving decision is based on a common state-action value function $\overline{Q}(s, a)$ obtained by combining the plurality of state-action value functions $Q_k(s, a)$ from the training sessions,

wherein the processing circuitry further implements an uncertainty estimator (222) configured to estimate an uncertainty by computing a variability measure for values of the plurality of state-action value functions evaluated for a state-action pair corresponding to each of the tentative tactical driving decisions by the RL agent,
wherein the vehicle control interface is configured to execute the at least one tentative tactical driving decision in the real world in dependence of the estimated uncertainty, such that one of the tentative tactical driving decisions is executed only if its variability measure is less than a threshold $C_v$,
wherein the variability measure is one or more of the following: a variance, a range, a deviation, a variation coefficient, an entropy.

**11.** A computer program comprising instructions to cause the arrangement of claim 10 to perform the method of any of claims 1 to 9.

**12.** A data carrier carrying the computer program of claim 11.

**Patentansprüche**

**1.** Computer-implementiertes Verfahren (100) zur Steuerung von Aktuatoren in einem autonomen Fahrzeug unter Verwendung eines Agenten für Verstärkungslernen, (Reinforcement Learning, RL), das Verfahren umfassend:

mehrere Trainingssitzungen **(110 - 1, ...,110 - K),** in denen der RL-Agent mit einer simulierten oder realen Umgebung einschließlich des autonomen Fahrzeugs interagiert, so dass in jeder Trainingssitzung die Umgebung einen anderen Anfangswert hat und jede Trainingssitzung eine Zustands-Aktions-Wertfunktion $Q_k(s,a)$ in Abhängigkeit von Zustand und Aktion ergibt;
Entscheidungsfindung (112), bei der der RL-Agent für einen Zustand, der die umgebenden Fahrzeuge in einer Fahrumgebung des autonomen Fahrzeugs beschreibt, mindestens eine vorläufige taktische Fahrentscheidung ausgibt, wie z.B. einen Spurwechsel oder die Frage, ob an einer Kreuzung angehalten oder gefahren werden soll, die sich auf die Steuerung des autonomen Fahrzeugs in der realen Welt bezieht, wobei die vorläufige taktische Fahrentscheidung auf einer gemeinsamen Zustands-Aktions-Wertfunktion $\overline{Q}(s,a)$ basiert, die durch Kombinieren der mehreren Zustands-Aktions-Wertfunktionen $Q_k(s,a)$ aus den Trainingssitzungen erhalten wird;
eine Unsicherheitsschätzung (114), die das Berechnen eines Variabilitätsmaßes für Werte mehrerer Zustands-Aktions-Wertfunktionen umfasst, die für ein Zustands-Aktions-Paar bewertet werden, das jeder der vorläufigen taktischen Fahrentscheidungen entspricht; und
eine Fahrzeugsteuerung (116), wobei die mindestens eine vorläufige taktische Fahrentscheidung in der realen Welt durch Senden von verdrahteten oder drahtlosen Signalen an die Aktoren in dem Fahrzeug und in Abhängigkeit von der geschätzten Unsicherheit ausgeführt wird, so dass eine der vorläufigen taktischen Fahrentscheidungen nur ausgeführt wird, wenn ihr Variabilitätsmaß kleiner als ein Schwellenwert $C_v$ ist, wobei das Variabilitätsmaß eines oder mehrere der folgenden ist: eine Varianz, ein Bereich, eine Abweichung, ein Variationskoeffizient, eine Entropie.

2. Verfahren nach Anspruch 1, wobei:

die Entscheidungsfindung beinhaltet, dass der RL-Agent mehrere vorläufige Entscheidungen ausgibt; und
die Fahrzeugsteuerung eine sequentielle Bewertung der vorläufigen Entscheidungen im Hinblick auf ihre geschätzten Unsicherheiten umfasst.

3. Verfahren nach Anspruch 2, wobei eine Rückfallentscheidung ausgeführt wird, wenn die sequentielle Bewertung keine auszuführende vorläufige Entscheidung ergibt.

4. Verfahren nach einem der vorhergehenden Ansprüche, wobei der RL-Agent mindestens ein neuronales Netz umfasst.

5. Verfahren nach Anspruch 4, wobei der RL-Agent durch einen Policy-Gradienten-Algorithmus, wie z. B. einen Algorithmus mit Akteurkritik, ermittelt wird.

6. Verfahren nach Anspruch 4, wobei der RL-Agent ein Q-Learning-Agent ist, wie z.B. ein Deep Q-Netzwerk, DQN.

7. Verfahren nach einem der Ansprüche 4 bis 6, wobei in den Trainingssitzungen eine gleiche Anzahl von neuronalen Netzen verwendet wird.

8. Verfahren nach einem der Ansprüche 4 bis 7, wobei der Anfangswert einer randomisierten früheren Funktion (RPF) entspricht.

9. Verfahren nach einem der vorhergehenden Ansprüche, wobei die Entscheidungsfindung auf einer zentralen Tendenz der mehreren Zustands-Aktions-Wertfunktionen basiert.

10. Anordnung (200) zur Steuerung von Aktuatoren in einem autonomen Fahrzeug (299), umfassend:

eine Fahrzeugsteuerungsschnittstelle (214), die konfiguriert ist, um Signale von physikalischen Sensoren im Fahrzeug zu empfangen, um dadurch aktuelle Bedingungen einer Fahrumgebung des autonomen Fahrzeugs oder interne Zustände, die im Fahrzeug vorherrschen, zu erfassen, und das autonome Fahrzeug zu steuern, indem sie verdrahtete oder drahtlose Signale an die Aktuatoren im Fahrzeug überträgt;
einen Speicher (212); und
eine Verarbeitungsschaltung (210), die mit der Fahrzeugsteuerungsschnittstelle verbunden ist und einen Agenten (220) für Verstärkungslernen, RL, implementiert, der konfiguriert zum:

- Interagieren mit einer simulierten oder realen Umgebung, die das autonome Fahrzeug in mehreren Trainingssitzungen einschließt, so dass in jeder Trainingssitzung die Umgebung einen anderen Anfangswert hat und die Trainingssitzung eine Zustands-Aktions-Wertfunktion $Q_k(s,a)$ in Abhängigkeit von Zustand und Aktion ergibt, und
- Ausgeben von mindestens einer vorläufigen taktischen Fahrentscheidung für einen Zustand, der die umgebenden Fahrzeuge in einer Fahrumgebung des autonomen Fahrzeugs beschreibt, wie z. B. einen Spurwechsel oder ob an einer Kreuzung angehalten oder weitergefahren werden soll, in Bezug auf die Steuerung des autonomen Fahrzeugs in der realen Welt, wobei die vorläufige taktische Fahrentscheidung auf einer gemeinsamen Zustands-Aktions-Wertfunktion $\overline{Q}(s,a)$ basiert, die durch Kombination der mehreren Zustands-Aktions-Wertfunktionen $Q_k(s,a)$ aus den Trainingssitzungen erhalten wird,

wobei die Verarbeitungsschaltung ferner einen Unsicherheitsschätzer (222) implementiert, der konfiguriert ist, um eine Unsicherheit zu schätzen, indem er ein Variabilitätsmaß für Werte der mehreren Zustandsaktionswertfunktionen berechnet, die für ein Zustandsaktionspaar bewertet werden, das jeder der vorläufigen taktischen Fahrentscheidungen des RL-Agenten entspricht,

wobei die Fahrzeugsteuerungsschnittstelle konfiguriert ist, um die mindestens eine vorläufige taktische Fahrentscheidung in der realen Welt in Abhängigkeit von der geschätzten Unsicherheit auszuführen, so dass eine der vorläufigen taktischen Fahrentscheidungen nur ausgeführt wird, wenn ihr Variabilitätsmaß kleiner als ein Schwellenwert $C_v$ ist,

wobei das Variabilitätsmaß eines oder mehrere der folgenden ist: eine Varianz, ein Bereich, eine Abweichung, ein Variationskoeffizient, eine Entropie.

11. Computerprogramm mit Anweisungen, um die Anordnung nach Anspruch 10 zu veranlassen, das Verfahren nach einem der Ansprüche 1 bis 9 durchzuführen.

12. Datenträger mit dem Computerprogramm nach Anspruch 11.

## Revendications

1. Procédé informatisé (100) de commande d'actionneurs dans un véhicule autonome au moyen d'un agent d'apprentissage par renforcement, RL, le procédé comprenant :

une pluralité de sessions d'entraînement (110-1, ..., 110-K), dans lesquelles l'agent RL interagit avec un environnement simulé ou réel incluant le véhicule autonome, de sorte que, dans chaque session d'entraînement, l'environnement ait une valeur initiale différente et que chaque session d'entraînement donne une fonction de valeur d'état-action $Q_k(s,a)$ dépendant de l'état et de l'action ;

une prise de décision (112), dans laquelle l'agent RL émet, pour un état décrivant les véhicules environnants dans un environnement de conduite du véhicule autonome, au moins une décision tactique de conduite tentée, telle qu'un changement de voie ou s'il faut s'arrêter ou aller à une intersection, relative à la commande du véhicule autonome dans le monde réel, la décision tactique de conduite tentée étant basée sur une fonction de valeur d'action d'état commune $\overline{Q}(s,a)$ obtenue en combinant la pluralité de fonctions de valeur d'action $Q_k(s,a)$ des sessions d'entraînement ;

une estimation d'incertitude (114), incluant lequel le calcul d'une mesure de variabilité pour des valeurs de la pluralité de fonctions de valeur d'état-action évaluées pour une paire état-action correspondant à chacune des décisions tactiques de conduite tentées ; et

une commande de véhicule (116), la décision tactique de conduite tentée étant exécutée dans le monde réel par transmission de signaux câblés ou sans fil aux actionneurs du véhicule et en fonction de l'incertitude estimée de telle sorte qu'une des décisions de conduite tactique tentées ne soit exécutée que si sa mesure de variabilité est inférieure à un seuil $C_v$,

la mesure de variabilité étant une ou plusieurs des valeurs suivantes : une variance, une plage, un écart, un coefficient de variation, une entropie.

2. Procédé selon la revendication 1, dans lequel :

la prise de décision comprend le fait que l'agent RL produise de multiples décisions tentées ; et

la commande du véhicule comprend une évaluation séquentielle des décisions tentées par rapport à leurs incertitudes estimées.

3. Procédé selon la revendication 2, dans lequel une décision de repli est exécutée si l'évaluation séquentielle ne renvoie pas une décision tentée à exécuter.

4. Procédé selon l'une quelconque des revendications précédentes, dans lequel l'agent RL comprend au moins un réseau neuronal.

**EP 4 139 844 B1**

5. Procédé selon la revendication 4, dans lequel l'agent RL est obtenu par un algorithme de gradient de police, tel qu'un algorithme d'acteur critique.

6. Procédé selon la revendication 4, dans lequel l'agent RL est un agent d'apprentissage Q, tel qu'un réseau Q profond, DQN.

7. Procédé selon l'une quelconque des revendications 4 à 6, dans lequel les sessions d'apprentissage utilisent un nombre égal de réseaux neuronaux.

8. Procédé selon l'une quelconque des revendications 4 à 7, dans lequel la valeur initiale correspond à une fonction antérieure aléatoire, RPF.

9. Procédé selon l'une quelconque des revendications précédentes, dans lequel la prise de décision est basée sur une tendance centrale de ladite pluralité de fonctions de valeur d'état-action.

10. Dispositif (200) pour commander des actionneurs dans un véhicule autonome (299), comprenant :

une interface de commande de véhicule (214) configurée pour recevoir des signaux de capteurs physiques dans le véhicule, pour détecter ainsi les conditions actuelles d'un environnement de conduite du véhicule autonome ou les états internes régnant dans le véhicule, et pour commander le véhicule autonome en transmettant des signaux câblés ou sans fil aux actionneurs dans le véhicule ;
une mémoire (212) ; et
un circuit de traitement (210) connecté à l'interface de commande du véhicule et mettant en œuvre un agent d'apprentissage par renforcement (220), RL, configuré pour :

- interagir avec un environnement simulé ou réel comprenant le véhicule autonome dans une pluralité de sessions d'entraînement, de sorte que, dans chaque session d'entraînement, l'environnement ait une valeur initiale différente et que la session d'entraînement donne une fonction de valeur d'état-action $Q_k(s,a)$ dépendant de l'état et de l'action, et
- pour un état qui décrit les véhicules environnants dans un environnement de conduite du véhicule autonome, émettre au moins une décision tactique de conduite tentée, telle qu'un changement de voie ou s'il faut s'arrêter ou aller à une intersection, relative à la commande du véhicule autonome dans le monde réel, la décision tactique de conduite tentée étant basée sur une fonction de valeur d'état-action commune $\overline{Q}(s,a)$ obtenue en combinant la pluralité de fonctions de valeur d'état-action valeur $Q_k(s,a)$ des séances d'entraînement,

le circuit de traitement mettant en œuvre en outre un estimateur d'incertitude (222) configuré pour estimer une incertitude en calculant une mesure de variabilité pour des valeurs de la pluralité de fonctions de valeur d'état-action évaluées pour une paire état-action correspondant à chacune des décisions tactiques de pilotage tentées par l'agent RL,
l'interface de commande de véhicule étant configurée pour exécuter l'au moins une décision de conduite tactique tentée dans le monde réel en fonction de l'incertitude estimée, de sorte qu'une des décisions de conduite tactique tentée est exécutée uniquement si sa mesure de variabilité est inférieure à un seuil $C_v$,
la mesure de variabilité étant une ou plusieurs des mesures suivantes : une variance, une plage, un écart, un coefficient de variation, une entropie.

11. Programme informatique comprenant des instructions pour amener le dispositif selon la revendication 10 à exécuter le procédé selon l'une quelconque des revendications 1 à 9.

12. Support de données comportant le programme informatique selon la revendication 11.

**13**

100

| | | ... | |

110-1     110-2             110-K

112

114

116

Fig. 1

200

210     212

220

222

214

299

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. J. HOEL** ; **K. WOLFF** ; **L. LAINE**. Automated speed and lane change decision making using deep reinforcement learning. *Proceedings of the 21st International Conference on Intelligent Transportation Systems (ITSC)*, 04 November 2018, 2148-2155
- **LÜTJENS**. *Safe Reinforcement Learning with Model Uncertainty Estimates*, 20 October 2018
- **KAHN**. *Uncertainty-Aware Reinforcement Learning for Collision Avoidance*, 03 February 2017
- **OSBAND**. *Deep Exploration via Bootstrapped DQN*, 04 July 2016
- **R. S. SUTTON** ; **A. G. BARTO**. Reinforcement Learning: An Introduction. MIT Press, 2018
- **V. MNIH et al.** Human-level control through deep reinforcement learning. *Nature*, 2015, vol. 518, 529-533
- Randomized prior functions for deep reinforcement learning. **I. OSBAND** ; **J. ASLANIDES** ; **A. CASSIRER et al.** Adv. in Neural Inf. Process. Syst.. 2018, vol. 31, 8617-8629